# EUROPEAN PATENT SPECIFICATION

(11) **EP 0 575 010 B1**
(45) Date of publication and mention of the grant of the patent: **17.09.1997**
(21) Application number: 93201744.5
(22) Date of filing: 17.06.1993
(51) Int. Cl.: A23C 9/123

(54) **Method of preparing a fermented milk product**
Verfahren zur Herstellung eines Sauermilchproduktes
Procédé de préparation d'un lait fermenté

(30) Priority: 19.06.1992 NL 9201089
(43) Date of publication of application: 22.12.1993
(73) Proprietor: VERENIGDE COÖPERATIEVE MELKINDUSTRIE COBERCO B.A., NL-7201 MH Zutphen (NL)
(72) Inventor: Klaver, Fanciscus Adrianus Maria, NL-6717 TB Ede (NL)
(74) Representative: de Bruijn, Leendert C.

(56) References cited:
- EP-A- 0 443 543
- US-A- 4 156 019
- LE LAIT vol. 60, no. 591, 1980, PARIS pages 458 - 473 C. BOUILLANE ET AL. 'Etude de quelques caractères de souches de Streptococcus thermophilus utiliseés en fabrication de yoghourt et proposition d'une méthode de classement'
- CULTURED DAIRY PRODUCTS JOURNAL vol. 17, no. 1, 1982, pages 22 - 25 J. SINGH ET AL. 'Yoghurt starters in skim milks. I . Acid and flavour production and proteolytic activity by yoghurt starters'
- FOOD SCIENCE AND TECHNOLOGY ABSTRACTS N 72-05-P0797 1972, C. LUCA 'Influence of yoghurt microorganisms on contents of nitrogenous substances'
- JOURNAL OF DAIRY SCIENCE. vol. 74, no. 2, 1991, CHAPAIGN, ILLINOIS US pages 389 - 397 C. OBERG ET AL. 'Effects of proteolytic Activity of Thermolactic cultures on physical properties of mozarella cheese'
- JOURNAL OF DAIRY SCIENCE SUPPLEMENT 1 vol. 67, no. D86, 1984, CHAPAIGN, ILLINOIS US page 83 Y. BEYATLI ET AL. 'Relationship between lactic acid production and proteolytic activity of thermophilic lactic microorganisms isolated from yogurt'
- JOURNAL OF DAIRY SCIENCE. vol. 73, no. 4, 1990, CHAPAIGN, ILLINOIS US pages 894 - 899 S. RAJAGOPAL ET AL. 'Associate growth and proteolysis of Streptococcus thermophilus and Lactobacillus bulgaricus in skim milk'

## Description

The invention relates to a method of preparing a fermented milk product by fermenting milk with the aid of at least one strain of the species *Streptococcus thermophilus* and a strain of the species *Lactobacillus delbrueckii* subsp. *bulgaricus* or *Lactobacillus helveticus*.

Fermented milk products of this type, such as yoghurt, have formed an attractive foodstuff for the consumer since time immemorial. In addition, the consumption thereof, especially if the products also contain other organisms such as *Bifidobacterium bifidum* or *Lactobacillus acidophilus*, is often considered to have a favourable effect on health. The basis for the preparation of these products is formed by the combination of the microorganisms *Streptococcus thermophilus*, on the one hand, and *Lactobacillus delbrueckii* subsp. *bulgaricus*, on the other hand. In this combination, protocooperation occurs: if these types are cultured together, they stimulate one another's growth, which process produces the texture and taste characteristic of these products. The combination of *Streptococcus thermophilus* and *Lactobacillus delbrueckii* subsp. *bulgaricus* is often referred to as yoghurt culture. Such a protocooperation also occurs in the combination of *Streptococcus thermophilus* with *Lactobacillus helveticus*.

It is known that a problem arises in fermenting with said cooperative combinations: the lactobacillus, which is indispensable because of its contribution to the aroma and its production of compounds which stimulate the growth of the streptococcus, is also the cause of acid formation and protein breakdown which often proceed too far and which then results in turn in the appearance of a different, harsh and/or bitter taste during the storage of the fermented product. An acidification which proceeds too far is manifested both in acidification during the last phase of the preparation and in the postacidification during storage at low temperature. As scaling-up continues in the dairy factories and the volumes to be processed increase, the duration of processing becomes longer, as a result of which the phenomena of acidification and postacidification also become more marked. Much attention has therefore already been paid to this problem and it has been tackled in various ways.

A direct approach is based on eliminating the lactobacillus. The killing of all the bacteria by pasteurising the finished, fresh product has been described (Zuivelzicht **38** [1982), 852-854); in this case, loss of texture occurs and this has to be offset by using thickening agents. Another drawback is that the absence of (sufficient) living microbes in many countries causes problems associated with foodstuffs laws.

The presence of living lactobacillus microbes in the finished product, which nevertheless contains living streptococci, can also be prevented. In order, nevertheless, to achieve a good growth of the streptococci in the case of total absence of the lactobacilli, growth stimulants, such as casein hydrolysate, are added to the milk or are released in the milk itself by enzymatic hydrolysis (J. Dairy Res. **49** [1982], 147-152).

An alternative is to incubate at least a portion of the milk with the lactobacillus and to kill this organism before inoculating the milk with the streptococcus (EP-A-443653).

Yet another possibility is described in EP-A-322010: the lactobacilli and the streptococci are cultured separately from one another in such a way that exchange of the metabolic products occurs via a semipermeable membrane. The final product is obtained by continued incubation of the material containing the streptococci.

A completely different approach to the problem of excessive acidification during storage of the fermented milk product is described in EP-A-81705; in this case, special strains of *Lactobacillus delbrueckii* subsp. *bulgaricus* having a markedly reduced proteolytic activity are used. The preparation of "mildly acidifying" yoghurt with the aid of a weakly proteolytic strain of *Lactobacillus delbrueckii* subsp. *bulgaricus* has also been described elsewhere (Voedingsmiddelentechnologie **25** [1992] (3), 11-13). An advantage of this approach is that, in contrast to the methods described above, the method fits in closely with the normal method of yoghurt preparation. In this case, however, the entire acidification is delayed, less acetaldehyde (the substance which is of essential importance for the characteristic taste of yoghurt) is formed and the sensitivity of the product to structural breakdown is greater than in the case where a normal yoghurt culture is used.

In J. Dairy Science, **74**, 389-397 (1991) the effects of proteolytic activity of cultures of *Lactobacillus delbrueckii* ssp. *bulgaricus* and of *Streptococcus* (*salivarius* ssp.) *thermophilus* on the physical properties of Mozzarella cheese are described.

A multidimensional analysis of properties of *Streptococcus thermophilus* strains is provided in Le Lait, LX, 458-473 (1980).

J. Dairy Science **73**, 894-899 (1990) decribes the associative growth and proteolysis of *S. thermophilus* and *L. bulgaricus* in skim milk. The proteolytic activity of the least active of nine *L. bulgaricus* strains is reported to be four times higher than the proteolytic activity of the most active of nine *S. thermophilus* strains.

One or more disadvantages therefore appear to be associated with all the methods described above: the use of additives have a cost-increasing effect and, in addition, involve the risk of the occurrence of taste deficiencies in the product, little characteristic taste and poorer product texture, and the use of technically complicated equipment, which likewise has a cost-increasing effect. In addition, the products of some of the methods described above do not meet the legal requirements as a result of the lack of sufficient viable microbes.

It has now been found that the disadvantages mentioned can be avoided and, while fitting in with the traditional methods, a mildly acid fermented milk product can nevertheless be obtained by, during fermentation, using a strain of the *Streptococcus thermophilus* type having a proteolytic capacity which is at least equal to that of the lactobacillus which is normal in the inoculating culture. The reference strain used for a normal lactobacillus is the strain CBS 903.87 (CBS: Centraal Bureau voor Schimmelcultures at Baarn) of *Lactobacillus delbrueckii* subsp. *bulgaricus*. This proteolytic capacity distinguishes such a streptococcus strain from the streptococcus strains normally encountered in a yoghurt culture. In the culturing of such a strongly proteolytic strain in milk, the characteristic is manifested in the release of a relatively large amount of protein fragments (peptides and amino acids) and also in an increased acidification activity. Although the activity mentioned last is only indirectly associated with the proteolytic characteristic, the acidification activity, which is relatively easy to measure, is used as a measure of the proteolytic activity within the scope of the invention.

Proteolytic streptococci may be encountered in thermophilic cheese starters in which *S. thermophilus* is one of the most important acidifying organisms, such as those used for the preparation of certain Italian types of cheese. The presence of a *Streptococcus* strain of the desired type can be detected in a manner known to the person skilled in the art by streaking a certain dilution of the cheese starter on a selective nutrient (for example ST-agar: Biotechnol. and Bioeng. **XIX** [1977], 821-839) and culturing the isolated bacteria thus obtained in milk. Any organism which grows rapidly in milk is then investigated taxonomically, also in a known manner, to verify whether it is in fact a strain of *S. thermophilus.*

The mildly acid product which can be obtained with the method according to the invention, appears, as regards viscosity and texture, to be identical to the product prepared in the normal manner; only the acidification and postacidification are strongly reduced. Although the acetaldehyde content may be somewhat lower than for the traditional method if the method according to the invention is used, values of over 10 mg CH₃CHO per kg of product are obtained, provided the inoculation ratio between proteolytic streptococci, on the one hand, and lactobacilli, on the other hand, is not too unfavourable. It is only above an extreme value such as 1000:1 that the acetaldehyde content may be expected to reach an organoleptically unsatisfactory level.

It is surprising that, although the postacidification is markedly reduced, the number of lactobacilli in the product may remain at a level which is comparable to (is more than 10% of) that of the product obtained by the normal method.

In the incubation of a markedly proteolytic *Streptococcus* strain together with a normal yoghurt culture compared with the incubation of a normal yoghurt culture alone, an acidification which is comparable in speed is found to occur in the first instance: a pH of between 4.8 and 4.6 is reached with approximately the same speed. The further drop in pH (acidification), occurring during draining, to a value of approximately 4.3, however, is found to be appreciably slower; during storage of the product at fairly low temperature, the acidification is also markedly reduced; in the method according to the invention, therefore, there is both a reduced acidification during the preparation and a reduced postacidification during the storage.

The method according to the invention can be used both in the preparation of stirred yoghurt and products comparable therewith, and in the preparation of products such as set yoghurt. In the preparation of set yoghurt, the milk is generally inoculated with a relatively high percentage of yoghurt culture (for example 2.5%) and incubated in the final packaging at a high temperature (40-45°C) but consequently for a relatively short time; in the preparation of stirred yoghurt, the milk inoculated with a low percentage of yoghurt culture (for example 0.025%) is incubated for a longer time but at lower temperature (usually between 30 and 37°C) in a tank, and then stirred until a homogeneous product is obtained before the final package is filled with the stirred product. Methods of preparation in which characteristics of the two methods are combined, are known as well.

Milk is understood here as meaning any raw material suitable for the preparation of fermented milk products: firstly cows milk, but also the milk of other mammals such as horses, sheep or goats. The milk fat may be entirely or partly replaced by vegetable fat; in some cases, constituents such as fat, water or casein will be removed from the milk but milk constituents - in particular in the form of ultrafiltration retentate - may also be added.

The streptococci in the normal yoghurt cultures are usually very weakly proteolytic; markedly proteolytic streptococci have to be sought in other sources, such as some thermophilic cheese starters.

The markedly proteolytic capacity of the strains of the species of *Streptococcus thermophilus* to be used according to the invention is manifested, inter alia, in the level of the acidification activity¹. From Table 1 it is evident that ST8 and LO (deposited under Nos. CBS 263.92 and CBS 262.92), which are examples of such proteolytic strains of *S. thermophilus*, have a markedly higher acidification activity than other strains of *S. thermophilus* which have been isolated from commercially obtainable yoghurt cultures such as ISt. Preferably, the method according to the invention is therefore carried out by making use of the strain ST8 or LO, and in particular, the strain ST8 which is remarkable for its proteolytic capacity.
¹ The acidification activity is measured by measuring the degree of acidity (measured in accordance with NEN Standard 613 (1963) and expressed in °N) of milk which has been incubated at 32°C for 5 hours after inoculation of 2% of the relevant culture.

**Table 1**

| Acidification activity of various *S. thermophilus* strains (S) of *L. delbrueckii* subsp. *bulgaricus* strains (L) and of normal yoghurt cultures (S+L). | | |
|---|---|---|
| Strain/culture | Origin | Acidification activity (°N) |
| Ls (S) | 1) | 27 |
| S3 (S) | 1) | 28 |
| Rs (S) | 2) | 29 |
| Sts (S) | (CBS 904.87) | 28 |
| LO (S) | (CBS 262.92) | 44 |
| ST8 (S) | (CBS 263.92) | 54 |
| Ib (L) | (CBS 903.87) | 35 |
| Rb (L) | 3) | 38 |
| ISt (S+L) | 1) | 67 |
| RR (S+L) | 1) | 58 |
| 1) Obtainable from Coöperatieve Stremsel- en Kleurselfabriek, Leeuwarden 2) the streptococcus in culture RR 3) the lactobacillus in culture RR | | |

The ratio between the amount to be inoculated of a fully grown milk culture of the proteolytic *S. thermophilus*, on the one hand, and the amount of other inoculation material, on the other hand, is preferably between 1:1 and 100:1; in most stirred yoghurt preparation cases, this ratio will be between 1:1 and 10:1, while in the case of set yoghurt preparation a ratio between 10:1 and 100:1 will usually be chosen in view of the relatively short preparation time.

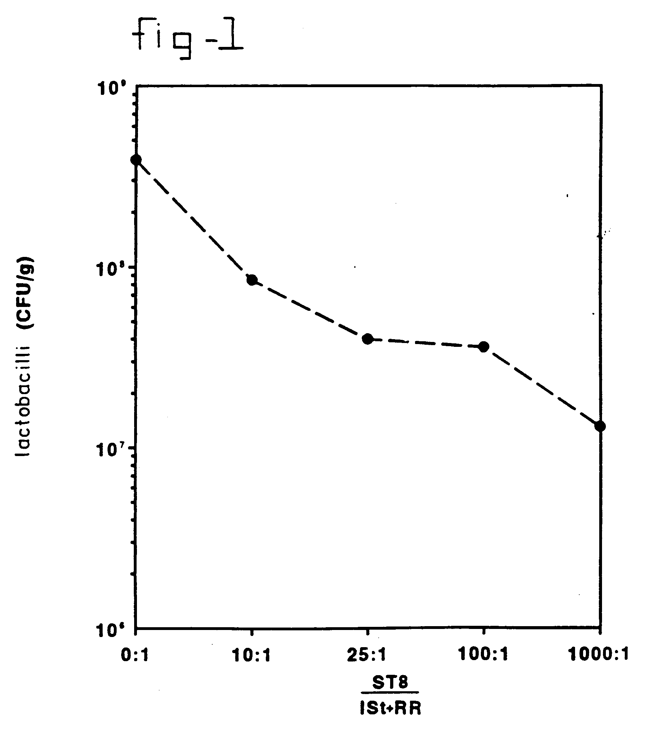

If the said ratio is below the specified lower limit in these cases, the postacidification appears to be insufficiently suppressed; a content higher than that of the specified upper limit may give rise to organoleptically different characteristics or to undesirably low numbers of lactobacilli (Figure 1).

In the normal preparation of fermented milk products by inoculating a mixture of streptococci and lactobacilli, the number of lactobacilli present in the milk immediately after inoculation is virtually always above 10⁴ CFU/ml. Although lower numbers may be sufficient in the present method, numbers of lactobacilli corresponding to those in the traditional preparation will preferably be strived for in the inoculation.

Culturing temperature and inoculation percentage of the normal yoghurt cultures are equal to those which are used in the normal product preparation. Of course, the fully grown cultures may be replaced, as is normal in industrial yoghurt preparation, by cultures in dried or otherwise concentrated form.

In addition, the practice of the novel method, for preparing any milk product, is no more complicated in principle than the corresponding traditional method, because only the use of an additional inoculation culture is required without other adjustments being necessary: the pretreatment of the milk, such as pasteurisation and homogenisation, and its processing (culturing, possibly stirring and bottling) is performed entirely as in a normal preparation process. The equipment to be used and the cultures to be used in addition to the proteolytic streptococcus are not different.

The method can be used for the preparation of either stirred yoghurt or set yoghurt, the proteolytic streptococcus being used in combination with standard yoghurt cultures.

In yet another embodiment of the method, the markedly proteolytic streptococcus is combined with a yoghurt culture and a culture of *Bifidobacterium* and/or *L. acidophilus*. Here, again, no change to the known method is necessary, in principle, other than the use of the markedly proteolytic streptococcus as an addition to the nonproteolytic streptococcus in the culture mixture.

The invention is illustrated by reference to a few examples.

### Example 1

### Stirred yoghurt

Portions of stirred yoghurt were prepared by inoculating skimmed milk, to which 2% by weight of skimmed milk powder had been added, with fully grown yoghurt cultures ISt and RR in a ratio of 1:1 and a fully grown culture of *S. thermophilus* strain ST8 (CBS 263.92). The inoculation percentage of the latter strain was always 0.1% (v/v); the inoculation percentage of the mixture of ISt and RR was varied, as shown in Table 2. The mixtures were incubated at 32°C until a pH of 4.40 was reached, then stirred to form a smooth composition and finally cooled to 7°C. The products obtained were kept at 7°C for 15 days. In addition, a portion of stirred yoghurt (the reference sample) was prepared in the traditional manner by inoculating with 0.025% (v/v) of the ISt/RR mixture alone.

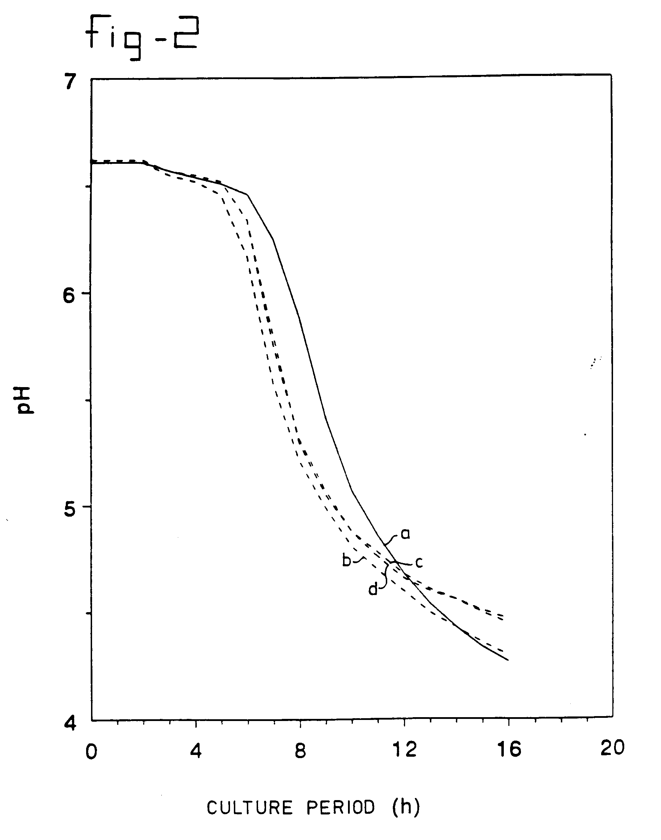

The variation in the pH during the preparation (Figure 2), the degree of postacidification over 14 days at 7°C (pH values pH₁ and pH₂ of the fresh product and the stored product, respectively, and the increase Δ°N of the degree of acidity in said period), and both the content of acetaldehyde (in mg/kg) and the number of lactobacilli (L) and streptococci (S) (in log[CFU/ml] where CFU is the number of colony-forming units) in the stored product were measured. The results are reported in Table 2.

**Table 2**

| ST8:(ISt+RR) | Δ°N | pH₁ | pH₂ | CH₃CHO | L | S |
|---|---|---|---|---|---|---|
| 4:1 | 17 | 4.22 | 4.10 | 14.2 | 7.8 | 8.6 |
| 40:1 | 16 | 4.39 | 4.24 | 10.0 | 6.8 | 8.7 |
| 400:1 | 17 | 4.39 | 4.23 | 10.1 | 5.9 | 8.8 |
| reference | 28 | 4.23 | 4.03 | 15.9 | 8.2 | 8.7 |

The product prepared with ST8 and yoghurt culture in a ratio of 4:1 was compared with the reference product in a so-called blind test by a panel of experienced testers. Immediately after the preparation, taste and texture of both products were rated equally; after 14 days storage at 7°C, the delayed postacidification appeared to have resulted in a general preference of the testing panel for the product according to the invention over the product prepared traditionally.

### Example 2

### Set yoghurt

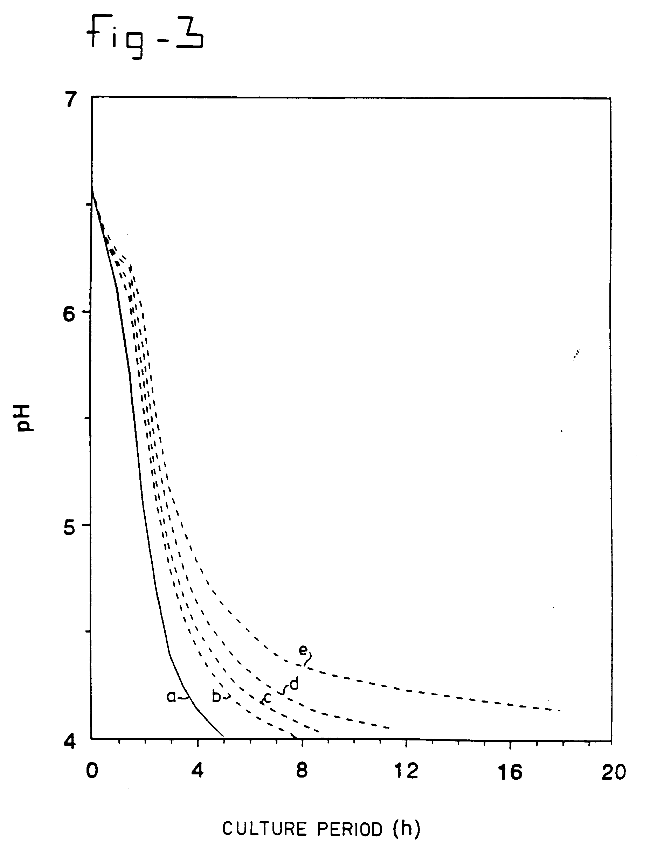

Whole milk (3% by weight of fat) was homogenised (20 MPa, 55°C), pasteurised (5 min, 85°C) and cooled to 45°C. Then 250 ml portions of the milk treated in this way were inoculated with a total of 2.5% (v/v) of a mixture of fully grown yoghurt cultures ISt and RR (in a ratio of 1:1) and a fully grown culture of *S. thermophilus* strain ST8 (CBS 263.92), various values being chosen for the inoculation ratio between, on the one hand, the yoghurt culture and, on the other hand, the ST8 culture. The mixtures were incubated at 45°C until a pH of 4.45 was reached and then cooled to 7°C. The variation of the pH during the preparation (Figure 3), the degree of postacidification over 14 days at 7°C (pH values pH₁ and pH₂ of the fresh product and the stored product, respectively, and the increase Δ°N of the degree of acidity in said period), and both the content of acetaldehyde (in mg/kg) and the numbers of lactobacilli (L) and streptococci (S) (in log [CFU/ml], where CFU is the number of colony-forming units) in the stored product were measured. The results are given in Table 3.

**Table 3**

| ST8:(ISt+RR) | Δ°N | pH₁ | pH₂ | CH₃CHO | L | S |
|---|---|---|---|---|---|---|
| 10:1 | 12 | 4.33 | 4.05 | 14.9 | 7.9 | 8.8 |
| 25:1 | 10 | 4.36 | 4.13 | 13.0 | 7.6 | 8.8 |
| 100:1 | 9 | 4.37 | 4.15 | 12.1 | 7.6 | 8.7 |
| reference | 17 | 4.30 | 3.95 | 18.4 | 8.6 | 8.8 |

The products containing ST8 appeared to have a comparable texture to set yoghurt prepared by traditional methods; the acidification appeared to be delayed and the postacidification during storage was markedly reduced with respect to the reference product, which was prepared in an otherwise identical manner but without ST8.

### Description of Figures

Figure 1. The number of lactobacilli in yoghurt prepared according to the invention as a function of the ratio between the cell number of the proteolytic streptococcus, on the one hand, and that of the yoghurt culture, on the other hand, in the inoculation material. The method of preparation was identical to that described in Example 2, although different inoculation ratios were used.
Figure 2. The variation in the pH value during the preparation of stirred yoghurt as described in Example 1, with ratios in the inoculation material between the cell number of the proteolytic streptococcus, on the one hand, and that of the yoghurt culture ISt+RR (1:1), on the other hand, of 0:1 (a), 4:1 (b), 40:1 (c) and 400:1 (d). The pH measurements were performed in a sample which was not stored at 7°C after stirring until smooth but was always kept at 32°C.
Figure 3. The variation in the pH value during the preparation of set yoghurt as described in Example 2, with ratios in the inoculation material between the cell number of the proteolytic streptococcus, on the one hand, and that of the yoghurt culture, on the other hand, of 0:1 (a), 10:1 (b), 25:1 (c), 100:1 (d) and 1000:1 (e). The pH measurements were performed in a sample which was always kept at 45°C.

## Claims

1. Method of preparing a fermented milk by fermenting milk with the aid of at least one strain of *Streptococcus thermophilus* and a strain of *Lactobacillus delbrueckii* subsp. *bulgaricus* or *Lactobacillus helveticus* comprising acidification of the fermented milk to a pH below 4.8, characterised in that a second strain of the species *Streptococcus thermophilus* is used, said second strain having a proteolytic capacity which is at least equal to that of *Lactobacillus delbrueckii* subsp. *bulgaricus* strain CBS 903.87.

2. Method according to Claim 1, characterised in that said second strain of the species *Streptococcus thermophilus* is the strain CBS 262.92 or the strain CBS 263.92.

3. Method according to Claim 1 or 2, characterised in that the ratio between the amount of a fully grown milk culture of said strain of proteolytic *S. thermophilus*, on the one hand, and the amount of other inoculation material, on the other hand, is between 1:1 and 100:1.

4. Method according to one of Claims 1-3, characterised in that the milk is inoculated with at least 10⁴ colony-forming units of the strain of the lactobacillus per ml of milk.

5. Method according to one of Claims 1-4, characterised in that the milk is inoculated, in addition, with a culture of *Bifidobacterium* and/or *L. acidophilus*.

## Patentansprüche

1. Verfahren zur Herstellung eines Sauermilchproduktes durch Vergären der Milch mit Hilfe mindestens eines Stamms des *Streptococcus thermophilus* and eines Stamms des *Lactobacillus delbrueckii*, Subspezies *bulgaricus* oder des *Lactobacillus helveticus* einschließlich der Säuerung des Sauermilchprodukts bis zu einem pH-Wert unter 4,8, dadurch gekennzeichnet, daß ein zweiter Stamm der Spezies *Streptococcus thermophilus* verwendet wird, wobei dieser zweite Stamm eine proteolytische Kapazität aufweist, die mindestens der des *Lactobacillus delbrueckii*, Subspezies *bulgaricus*, Stamm CBS 903.87 entspricht.

2. Verfahren nach Anspruch 1, dadurch gekennzeichnet, daß der vorerwähnte zweite Stamm der Spezies *Streptococcus thermophilus* der Stamm CBS 262.92 oder der Stamm CBS 263.92 ist.

3. Verfahren nach Anspruch 1 oder 2, dadurch gekennzeichnet, daß das Verhältnis zwischen der voll ausgebildeten Milchkultur des vorgenannten Stamms des proteolytischen *Streptococcus thermophilus* einerseits und der Menge des übrigen Impfmaterials andererseits zwischen 1:1 und 100:1 liegt.

4. Verfahren nach einem der Ansprüche 1-3, dadurch gekennzeichnet, daß die Milch mit mindestens 10⁴ koloniebildenden Einheiten des Lactobacillusstamms pro ml Milch beimpft wird.

5. Verfahren nach einem der Ansprüche 1-4, dadurch gekennzeichnet, daß die Milch zusätzlich mit einer Kultur des *Bifidobacteriums* und/oder des *Lactobacillus acidophilus* beimpft wird.

## Revendications

1. Procédé pour la préparation d'un lait fermenté par fermentation d'un lait à l'aide d'au moins une souche de *Streptococcus thermophilus* et d'une souche de *Lactobacillus delbrueckii* sous-espèce *bulgaricus* ou *Lactobacillus helveticus*, comprenant l'acidification du lait fermenté à un pH inférieur à 4,8, caractérisé en ce qu'une seconde souche de l'espèce *Streptococcus thermophilus* est utilisée, ladite seconde souche ayant une capacité protéolytique qui est au moins égale à celle de *Lactobacillus delbrueckii* sous-espèce *bulgaricus* souche CBS 903.87.

2. Procédé selon la revendication 1, caractérisé en ce que ladite seconde souche de l'espèce *Streptococcus thermophilus* est la souche CBS 262.92 ou la souche CBS 263.92.

3. Procédé selon la revendication 1 ou 2, caractérisé en ce que le rapport entre la quantité d'une culture dans du lait totalement développée de ladite souche de *S. thermophilu*s protéolytique, d'une part, et la quantité d'autre matériau d'inoculation, d'autre part, est compris entre 1:1 et 100:1.

4. Procédé selon l'une quelconque des revendications 1 à 3, caractérisé en ce que le lait est inoculé avec au moins 10⁴ unités formant colonie de la souche du lactobacillus par ml de lait.

5. Procédé selon l'une quelconque des revendications 1 à 4, caractérisé en ce que le lait est inoculé ,en outre, avec une culture de *Bifidobacterium* et/ou de *L. acidophilus*.
